# EUROPEAN PATENT APPLICATION

(11) **EP 2 883 456 A1**
(43) Date of publication of application: **17.06.2015**
(21) Application number: 13196791.1
(22) Date of filing: 12.12.2013
(51) Int. Cl.: A23F 3/16, A23F 3/40

(54) **Method to make a tea solution and the tea solution thus obtained**

(71) Applicant: Arenas Bustos, José Manuel, 30730 San Javier, Murcia (ES)
(72) Inventor: Arenas Bustos, José Manuel, 30730 San Javier (Murcia) (ES); Romero Torres, Raul, 30730 San Javier (Murcia) (ES)
(74) Representative: Carvajal y Urquijo, Isabel

(57) **Abstract**

Method for brewing tea chiefly based on black tea, spearmint and sugar, which comprises the steps of heating water to boiling point; adding black tea; thereafter adding spearmint and sugar to obtain a first solution, which is then boiled; stirred; allowed to marinate; filtrated to obtain a tea solution and finally, said tea solution is bottled.

## Description

### Technical field

The present invention relates to a method to make a tea solution, as well as the tea solution thus obtained, which is comprised within the field of the food industry.

### Background art

The green mint, *Mentha spicata,* spearmint or roman mint, is well known for the characteristic aroma that it imparts to food, moreover, it turns out to be less spicy than other mint species. It is a perennial herb native to Europe, Africa and Asia, which is largely used in gastronomy and perfumery because of its fresh and intense scent. The green mint contains essential oil menthol, which is a saturated secondary alcohol. It is used as an ingredient in mint flavored toothpastes, chewing gums and candies. Moreover, in the form of mint oil, it is further used in drugs for herpes simplex, ointments for treating nasal congestion, in anti-itch creams and lotions, in drugs for treating gums, mouth, sore throats and mouth rinses, as well as in vaginal infection creams.

Black tea is made from the dried leaves of *Camellia sinensis.* This tea possesses a stronger aroma and contains more theine than other teas with lower levels of oxidation. Its use is limited to infusions, usually, with milk or lemon.

There are different patents related to tea and spearmint, among which we list, just to illustrate the uses of theses plants, the following:
Document ES2163222, relates to a teabag with one compartment, specially for tea infusions, which has a thread located inside the chamber with one end connected to the teabag's bottom end, which is hot sealed, and another end passes through and can be withdrawn from the hot seal end.
Document ES2074216, relates to a method wherein tea extract is separated into two phases, a lighter colored and a darker colored phase, and more particularly it relates to instant tea products, comprising at least partially said phases.
Document ES2391061, relates to a method for manufacturing tea products from fresh leaves, which enables the simultaneous production of tea juice and tea from leaves and/or tea extract.
Document WO2010142826, describes a method for producing a sweet, refreshing beverage, which must be frozen for preservation purposes and then defrosted prior to consumption.

In spite the fact that tea and spearmint are largely used in food products, there are no known beverages, which are mainly based on these two products at the same time, and without preservatives, colorants, obtained naturally, and that can be, optionally, stored for long periods of time by means of pasteurization.

In the composition of spearmint, the following components can be found: alcohols: menthol, eucalyptol and linalool; antioxidant vitamins, vitamin A, beta-carotene, vitamin C, folates, vitamin B-6, riboflavin and thiamine; minerals, potassium, calcium, manganese, iron and magnesium; ketones, entone and carvone; terpenes, limonene, myrcene, caryophylene, a-pinene and b-pinene. In addition, it is low in calories (just 43 calories per 100 g) and contains zero cholesterol.

In the tea composition, the following components can be found: alkaloids, caffeine; minerals, zinc, calcium, chromium, magnesium, manganese, iron, potassium, phosphorus, fluorine and aluminum; flavonoids, catechins, theaflavines, flavonols glycosides and flavone C-glycosides.

### Description of the invention

The present invention relates to a method to make a tea solution based on black tea, spearmint and sugar and it also relates to a tea obtained according to said method, which reunites the advantageous properties for the body of using natural ingredients, whilst at the same time obtaining other advantages both from a nutritional and from an organoleptic point of view.

The method to make a tea solution based on black tea and spearmint, comprises: certain amount of water, which represents the baseline to incorporate the remaining ingredients, which is heated until it boils; black tea leaves are added; spearmint and sugar are incorporated, so as to form a first solution, then, this first solution is stirred; boiled, allowed to marinate, and filtrated to finally obtain a tea solution. Lastly, the tea solution is bottled.

The tea solution brewing process starts with certain amount of water (by weight) to which the following elements are added: tea, between 1.5 and 2.5 % (by weight); spearmint, between 4.5 and 5.5 % (by weight) and sugar, between 5 and 6 % (by weight).

In order to preserve the tea solution for long periods of time before its consumption, a pasteurization step might be added prior to proceed with the next step, i.e., bottling the tea solution.

For instance, pasteurization may be carried out using plate heat exchangers.

According to the present invention, a tea is provided, without preservatives and colorants, based on natural ingredients: black tea, spearmint, sugar and water.

In an optional and preferred embodiment of the invention, starting with an initial amount of water, the following components are incorporated: 2 % (by weight) of black tea, 5 % (by weight) of spearmint and 5.6 % (by weight) of sugar, those percentages being relative to the initial amount of water.

The benefits of this tea solution derive from the nature of its components, thereby it is cholesterol free, it relieves fatigue and stress, contains vitamins, minerals and antioxidants, improves the functioning of the respiratory and digestive systems, is astringent, diuretic, low in calories and stimulating.

The tea solution thus brewed, when compared to the existing products, presents the advantage that the consumer just has to take it out from the fridge or another storing means, and heat it to consume it, without having to prepare anything or using any brewing device.

Among the organoleptic advantages of this tea, it should be mentioned that the spearmint presence enhances the aroma and flavor, making it fresher and providing it with milder and nicer characteristics when compared to the known and typical black tea brews, in infusion form.

### Detailed description of the invention

For illustrative purposes, a method for manufacturing a tea solution that comprises the aforementioned ingredients is described. Said tea solution meets the advantageous benefits for the body of black tea and spearmint combined, whilst at the same time, obtaining other advantages both nutritional and organoleptic.

The following examples shall not be interpreted to limit the scope of the present invention.

### Example 1

1 kg of water is heated until it boils. Next, black tea leaves are added, according to a proportion by weight of 2 % (20 g).

After two minutes, spearmint and sugar are added. The proportion by weight of spearmint is 5 % (50 g) and the proportion of sugar, 5.6 % (56 g) relative to the amount of water used in the initial step. This way a first solution is obtained.

The first solution is boiled without stirring, for approximately two minutes.

Then it is stirred and next is left to marinate in order to extract most of the beneficial substances from the tea leaves and the spearmint.

Subsequently, the first solution is filtrated, eliminating the solid parts and thus obtaining a liquid free from solids, which is the tea solution.

Finally, the tea solution is bottled.

The tea solution thus obtained is a product with an excellent flavor and aroma that the consumer will just have to put inside the microwave oven or any other heating means, in order to heat it before its consumption.

### Example 2

1kg of water is heated until it boils. Then, black tea leaves are added, according to a proportion by weight of 1.6 % (16 g). After approximately three minutes, the spearmint and the sugar are added, thus obtaining a first solution. The proportion by weight for the spearmint is 4.5 % (45 g) and the proportion for sugar, 5.9 % (59 g). Said first solution is left to boil for approximately two minutes.

The Solution is stirred and is left to marinate in order to extract most of the beneficial substances from the tea leaves and the spearmint.

Subsequently, the solution is filtrated, thus removing any solid component.

In this example, in order to obtain a tea solution that can be preserved for long periods of time, the option of carrying out a standard pasteurization step will be preferably chosen.

Finally, the pasteurized tea solution is bottled.

## Claims

1. Method for brewing a tea solution based in water, black tea, spearmint and sugar **characterized in that** it comprises the following steps: heating a certain amount of water to boiling point; adding black tea leaves; adding spearmint and sugar to obtain a first solution; stirring said first solution; boiling it; allow it to marinate; filtrate the solution in order to obtain a tea solution and, finally, bottling the tea solution.

2. Method according to claim 1, **characterized in that** it further comprises a pasteurization step, before proceed to bottle.

3. Method according to claim 1 **characterized in that** black tea leaves are added, in a proportion of 1.5 to 2.5 % (by weight) relative to the amount of water to be heated.

4. Method according to claim 1 **characterized in** adding 4.5 to 5.5% (by weight) of spearmint and 5 to 6 %, by weight of sugar, relative to the amount of water to be heated.

5. Tea solution obtained according to the method of claims 1 to 4, **characterized in that** it comprises: water; 1.5 to 2.5 % (by weight) of black tea; 4.5 to 5.5 % (by weight) of spearmint; 5 to 6 % (by weight) of sugar, relative to an initial amount of water.
